# EUROPEAN PATENT SPECIFICATION

(11) **EP 0 478 303 B1**
(45) Date of publication and mention of the grant of the patent: **15.05.1996**
(21) Application number: 91308741.7
(22) Date of filing: 25.09.1991
(51) Int. Cl.: H01M 4/48, C01G 31/00, H01M 4/62

(54) **Silver vanadium oxide cathode material**
Silbervanadiumoxid-Kathodenmaterial
Matériau cathodique en oxyde mixte d'argent-vanadium

(30) Priority: 27.09.1990 US 589120
(43) Date of publication of application: 01.04.1992
(73) Proprietor: MEDTRONIC, INC., Minneapolis, Minnesota 55432-3576 (US)
(72) Inventor: Crespi, Ann M., Minneapolis, MN 55417 (US)
(74) Representative: Cockbain, Julian, Dr.

(56) References cited:
- EP-A- 0 380 058
- PATENT ABSTRACTS OF JAPAN, vol. 015, no. 271 (C-848), 10 July 1991

## Description

The present invention relates to high energy, high power density electrochemical cells and more particularly to the use of an improved silver vanadium oxide cathode material in such cells.

Silver vanadium oxide (SVO) is generally already known and used in batteries. Its preparation for use in batteries by means of a decomposition reaction is also well known (see US Patent Nos. 4310609 and 4391729). These patents disclose the following decomposition reaction for the preparation of SVO: 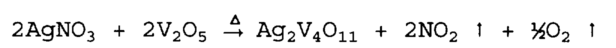 This decomposition reaction is accompanied by the evolution of gaseous products.

The use of SVO in solid-state electrochemical cells is also disclosed in EP-A-380058.

It has also been suggested that SVO can be prepared by addition or combination reactions: see Liang US Patent No. 4391729 (col. 2, lines 35-37); Bernard Raveau: Études sur les systèmes V-Ag-O et V-Cu-O, Revue de Chimie minérale t.4 No. 668: 729 (1967); André Casalot and Michael Pouchard: Sur quelques nouvelles phases non-stoechiométriques du système Ag₂O-V₂O₅-VO₂. 1. - Étude chimique et cristallographique, Bulletin De La Société Chimique De France No. 10 (1967); and B.B. Scholtens Diffusion of Silver in Silver Vanadium Bronzes, Mat. Res. Bull. 11: 1533-1538 (1976) Pergamon Press, Inc.

An object of the present invention is to provide an improved SVO cathode material with increased crystallinity by means of a combination or addition reaction without involving decomposition and thus without the evolution of any gaseous products.

We have now found that SVO cathode material prepared by chemical combination or addition reactions provides improved cells as compared to those which use SVO prepared by the decomposition reaction described above. Additionally, the procedure for preparation is easier. The cathode material is improved in the sense that such cells maintain a higher pulse voltage than those which use SVO prepared by a decomposition reaction. A higher pulse voltage leads to a decrease in charge time and hence an increase in cell life, eg. when used in devices such as cardiac defibrillators.

Thus viewed from one aspect the present invention provides the use as a cathode material for liquid electrolyte-containing electrochemical cells of a silver vanadium oxide, characterised in that said silver vanadium oxide is an oxide of formula Ag₂V₄O₁₁₋ₓ (where x is 0 or 0.25-0.35) prepared by a chemical combination or addition reaction.

Viewed from a further aspect the invention provides an electrochemical cell containing a silver vanadium oxide cathode and a liquid electrolyte, characterised in that said silver vanadium oxide is an oxide of formula Ag₂V₄O₁₁₋ₓ (where x is 0 or 0.25-0.35) prepared by a chemical combination or addition reaction.

The material which constitutes the cathode may further comprise a binder material and/or a conductive material. Binder materials suitable for use in accordance with the invention include methyl cellulose, ethylene propylene diene terpolymer (EPDM), polyethylene, polypropylene and fluorinated ethylene propylene (FEP) which may optionally be used with carbon black and/or graphite conductive material, and Teflon®.

The silver vanadium oxide cathode material of formula Ag₂V₄O₁₁₋ₓ where x is 0 or 0.25-0.35, may be produced by effecting at least one of the following steps at 300°C to 700°C;
(a) reacting Ag₂O with V₂O₅ in about a 1:2 mole ratio, in an oxidizing atmosphere; 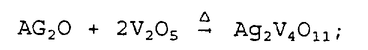
(b) reacting a silver compound or silver with V₂O₅ in about a 1:1 mole ratio, in an oxidising atmosphere: 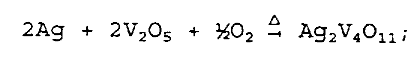 or
(c) reacting AgVO₃ with V₂O₅ in about a 2:1 mole ratio in an oxidising or an inert atmosphere:

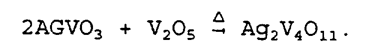

The addition reaction of step (b) yields Ag₂V₄O₁₁ or Ag₂V₄O_{11-y} (wherein y is in the range of from 0.25 to 0.35) depending on the reaction conditions, i.e. in oxidising or inert atmospheres.

The addition reaction of steps (a) to (c) may conveniently be carried out at a temperature of from 450°C to 550°C, preferably at temperatures of about 520°C and may proceed to completion within about 5 to 24 hours.

Lower temperatures require a longer reaction time. Once the reaction is completed, the material may be held at elevated temperature indefinitely, although undesirable grain growth may occur. Longer reaction times and higher temperatures may lead to diminished rate capability in cells and therefore, in general, the lower temperatures are preferred in order to limit grain growth in the reaction product.

Mixing of the reactants in the ratios specified is preferred although an excess of either initial reactant may be used. However, in such cases, the result is a mixture which may be difficult to separate. However, a non-stoichiometric mixture may be used.

Suitable inert atmospheres for the above reactions include for example argon, nitrogen and helium and suitable oxidising atmospheres include air and oxygen.

Preferred embodiments of the invention will now be described by way of example and with reference to the accompanying drawings in which:

Figures 1 and 2 are graphs comparing open-circuit voltage and minimum pulse voltage for test cells using the cathode material of the invention (Figure 1) and the cathode material of the prior art "decomposition" type (Figure 2).

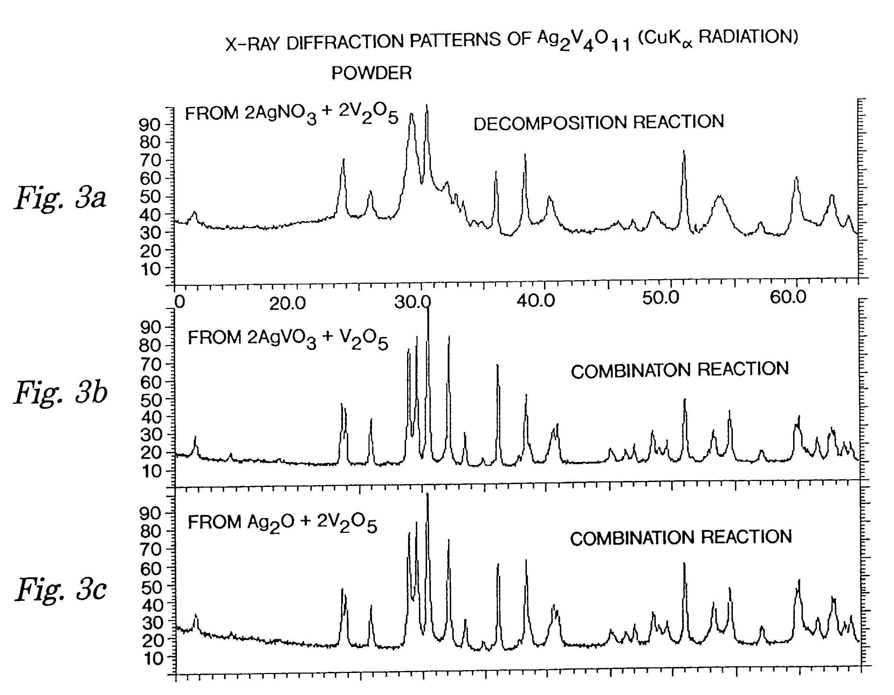

Figure 3 is a group of X-ray diffraction patterns of the prior art cathode material (3a) and the cathode material of the invention (3b and 3c).

### Examples

AgVO₃ and V₂O₅ powders in a 2:1 mole ratio were milled together and heated at 520°C under a flowing argon atmosphere to produce Ag₂V₄O_{11-y}, and under a flowing oxygen atmosphere to produce Ag₂V₄O₁₁. Ag₂O and V₂O₅ powders in a 1:2 mole ratio were also milled together and heated under the same conditions to produce the same products. The resultant products were then mixed with carbon black (a conductive material) and Teflon® (a binder material) and incorporated into high-rate cells.

The test cells were constructed from small rectangular strips of cathode material having an area of 4cm on each side which were then sandwiched between plates of lithium and fitted into a case filled with electrolyte. The electrolyte used was a 1:1 (by volume) mixture of propylene carbonate and diglyme containing 1M lithium perchlorate (LiClO₄). A separator of porous polypropylene was inserted between the lithium plates and the cathode material. Similar test cells using the cathode material prepared by the prior art decomposition reaction were also prepared.

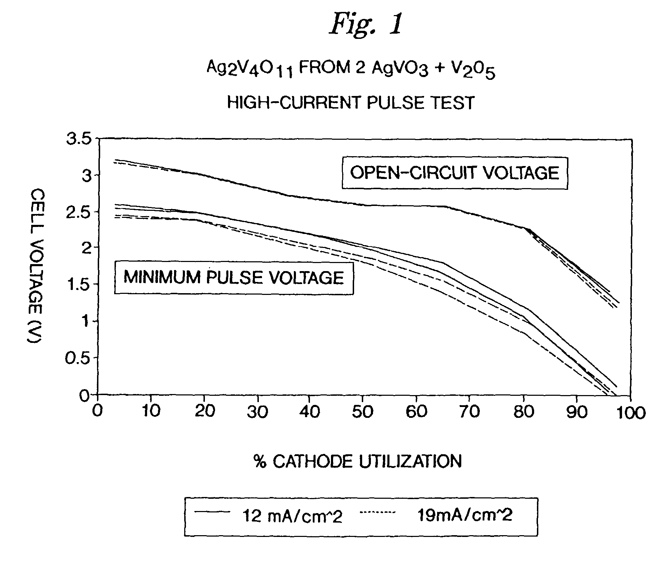

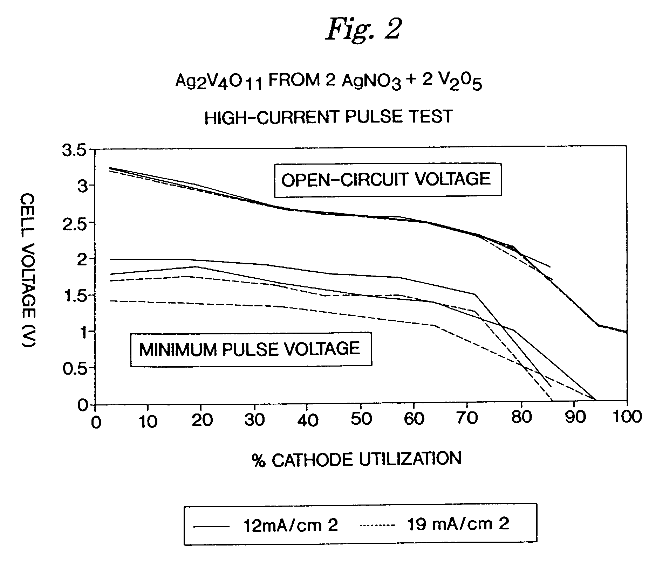

Each cell was discharged at a current density of 63 µA/cm. The discharge was periodically interrupted and the cells were then allowed to rest on open-circuit prior to a high current pulse. The open-circuit voltage immediately prior to the pulse was recorded and is shown in the upper traces of Figures 1 and 2. The cells were then pulsed at current densities of 12 or 19 mA/cm. Two cells were pulsed at each current density. The pulses were terminated when 0.25J/cm of energy had been delivered. The lower traces of Figures 1 and 2 represent the minimum voltage achieved during the pulse. It can be readily seen in Figure 1 that the material of the present invention provides a surprisingly smaller difference between open-circuit voltage and minimum pulse voltage than the prior art material of Figure 2.

Plots 3b and 3c are essentially identical, but Plot 3a has a higher background level, indicating lower crystallinity of the prior art material. Although the peaks are in the same position in each plot, they are sharper in plots 3b and 3c than in plot 3a, and in some cases two distinct peaks appear in plots 3b and 3c where only a single broad peak appeared in plot 3a. These observations all indicate a higher degree of crystallinity in the cathode material of the invention than in the prior art cathode material, which is surprising because high crystallinity is often associated with low rate capability in metal oxide cathodes.

Electrochemical cells comprising the cathode material of the invention are suitable for use in devices such as cardiac defibrillators etc. requiring a high pulse voltage.

## Claims

1. The use, as a cathode material for liquid electrolyte-containing electrochemical cells, of a silver vanadium oxide, characterised in that said silver vanadium oxide is an oxide of formula Ag₂V₄O₁₁₋ₓ (where x is 0 or 0.25-0.35) prepared by a chemical combination or addition reaction.

2. Use as claimed in claim 1 of a said oxide of formula Ag₂V₄O₁₁.

3. An electrochemical cell containing a silver vanadium oxide cathode and a liquid electrolyte, characterised in that said silver vanadium oxide is an oxide of formula Ag₂V₄O₁₁₋ₓ (where x is 0 or 0.25-0.35) prepared by a chemical combination or addition reaction.

4. A cell as claimed in claim 3 wherein said oxide is of formula Ag₂V₄O₁₁.

## Patentansprüche

1. Verwendung von Silbervanadiumoxid als Kathodenmaterial für einen flüssigen Elektrolyten enthaltende elektrochemische Zellen, dadurch gekennzeichnet, daß das Silbervanadiumoxid ein durch eine chemische Kombinations- oder Additionsreaktion hergestelltes Oxid mit der Formel Ag₂V₄O₁₁₋ₓ ist (wobei x gleich 0 ist oder im Bereich zwischen 0,25 und 0,35 liegt).

2. Gemäß Anspruch 1 beanspruchte Verwendung eines genannten Oxids mit der Formel Ag₂V₄O₁₁.

3. Elektrochemische Zelle, enthaltend eine Silbervanadiumoxid-Kathode und einen flüssigen Elektrolyten, dadurch gekennzeichnet, daß das Silbervanadiumoxid ein durch eine chemische Kombinations- oder Additionsreaktion hergestelltes Oxid mit der Formel Ag₂V₄O₁₁₋ₓ ist (wobei x gleich 0 ist oder im Bereich zwischen 0,25 und 0,35 liegt).

4. Zelle nach Anspruch 3, bei welcher das Oxid die Formel Ag₂V₄O₁₁ hat.

## Revendications

1. Utilisation d'un oxyde d'argent et de vanadium en tant que matériau de cathode pour éléments électrochimiques contenant un électrolyte liquide, caractérisé en ce que ledit oxyde d'argent et de vanadium est un oxyde répondant à la formule Ag₂V₄O₁₁₋ₓ (x étant égal à 0 ou à 0,25-0,35), préparé par une réaction de combinaison ou d'addition chimique.

2. Utilisation selon la revendication 1 dudit oxyde répondant à la formule Ag₂V₄O₁₁.

3. Elément électrochimique contenant une cathode formée d'oxyde d'argent et de vanadium et un électrolyte liquide, caractérisé en ce que ledit oxyde d'argent et de vanadium est un oxyde répondant à la formule Ag₂V₄O₁₁₋ₓ (x étant 0 ou 0,25-0,35) préparé par une réaction de combinaison ou d'addition chimique.

4. Elément selon la revendication 3, dans lequel ledit oxyde répond à la formule Ag₂V₄O₁₁.
